# EUROPÄISCHE PATENTSCHRIFT

(11) **EP 2 428 397 B1**
(45) Veröffentlichungstag und Bekanntmachung des Hinweises auf die Patenterteilung: **31.07.2013**
(21) Anmeldenummer: 11007469.7
(22) Anmeldetag: 14.09.2011
(51) Int. Cl.: B60P 7/08

(54) **Lochprofilschiene**
Perforated profile rail
Rail de profilé perforé

(30) Priorität: 14.09.2010 DE 102010045264
(43) Veröffentlichungstag der Anmeldung: 14.03.2012
(73) Patentinhaber: Fahrzeugbau Karl Tang GmbH, 40721 Hilden (DE)
(72) Erfinder: Böckmann, Udo, 42653 Solingen (DE)
(74) Vertreter: Schneiders, Josef

(56) Entgegenhaltungen:
- DE-A1-102008 019 162
- US-A1- 2008 164 723

## Beschreibung

Die Erfindung betrifft eine Lochprofilschiene für ein Nutzfahrzeug nach dem Oberbegriff vom Anspruch 1.

Eine solche Profilschiene ist aus DE 102008019162 A bekannt.

Aus dem Stand der Technik sind verschiedene Funktionsprofile für Bodengruppen für Nutzfahrzeuge bekannt. Beispielsweise beschreibt die DE 299 13 954 U1 ein Funktionsprofil für die Bodengruppe eines mit einer Plane seitlich verschließbaren Nutzfahrzeugs, umfassend einen Rammschutzabschnitt, wobei der Rammschutzabschnitt als Rammschutzprofil oder als Einhakprofil zum Verklammern von Seitenplanenspannern dient. In die Oberseite des Rammschutzabschnitts ist eine V-förmige Nut zur Aufnahme eines Einsteckprofils vorgesehen.

Demgegenüber liegt der Erfindung die Aufgabe zugrunde, eine verbesserte Profilschiene für ein Nutzfahrzeug zu schaffen.

Die der Erfindung zugrunde liegende Aufgabe wird durch die Merkmale des unabhängigen Patentanspruchs gelöst. Bevorzugte Ausführungsformen der Erfindung sind in den abhängigen Patentansprüchen angegeben.

Es wird eine Profilschiene für ein Nutzfahrzeug nach dem Anspruch 1.

Ausführungsformen der Erfindung haben den Vorteil, dass die Profilschiene in der Lage ist, Transportgut auf der Ladefläche des Nutzfahrzeugs zu sichern, selbst wenn über die Zurrgurte erhebliche Kraftspitzen auf die Öffnungen der Profilschiene wirken. Ein praktisches Beispiel ist hierbei ein abrupt eingeleiteter Bremsvorgang des Nutzfahrzeugs, bei welchem ruckartig die Zurrgurte mit extrem hohen Zurrlasten beaufschlagt werden. Durch die Erhöhung der Wandstärke der Profilschiene an den Öffnungsrändern können die so punktuell an den Öffnungsrändern auftretenden extremen Kräfte gleichmäßig über den gesamten Umfang der Öffnungsränder verteilt werden, womit einem lokalen Ausreißen der Öffnungen aufgrund der hohen Zurrlasten vorgebeugt wird. Somit wird insgesamt die Sicherung des Transportguts auch in Extremsituationen gewährleistet.

Nach einer Ausführungsform der Erfindung ist die Wandstärke der Öffnungsränder durch eine Aufwölbung des Randes verstärkt. Dies hat den Vorteil, dass eine solche Verstärkung der Wandstärke durch einen einfachen Verformungsvorgang erzeugt werden kann. Damit kann ausgehend von einem Vollprofil mit durchgängig gleicher Wandstärke durch einfache Verformungsvorgänge in mechanisch einfacher und damit kostengünstiger Weise eine Profilschiene erzeugt werden.

Nach einer weiteren Ausführungsform der Erfindung ist die Wandstärke der Öffnungsränder über den Umfang der Öffnungen konstant. Damit wird gewährleistet, dass auf den Rand der Öffnungen wirkende Kräfte gleichmäßig über den Rand einer jeweiligen Öffnung verteilt werden, sodass einem lokalen Ausreißen der Öffnung aufgrund eines lokalen Materialschwachpunkts vorgebeugt wird.

Vorzugsweise sind dabei die Öffnungen kreisförmig, was zum einen mechanisch einfach erzeugbar ist und zum anderen eine homogene Kraftverteilung über den Rand der jeweiligen Öffnung gewährleistet.

Nach einer weiteren Ausführungsform der Erfindung ist die Wandstärke der Öffnungsränder vorzugsweise zumindest verdoppelt gegenüber der Wandstärke der Profilschiene zwischen den Öffnungsrändern benachbarter Öffnungen.

Nach einer weiteren Ausführungsform der Erfindung ist das Nutzfahrzeug mit einer Plane seitlich verschließbar, wobei die Öffnungen ferner zur Aufnahme von Spannern zur Befestigung der Plane am Nutzfahrzeug ausgebildet sind. Insofern kommt den Öffnungen eine Doppelfunktion zu, nämlich zum einen die Funktion der Ladungssicherung und zum anderen die Funktion der Fixierung der Plane des Nutzfahrzeugs. Damit entfallen separate Elemente zur Fixierung der Plane am Nutzfahrzeug, was die Gesamtkosten eines entsprechenden Fahrzeugs reduziert.

Die Profilschiene der Erfindung weist einen Anfahrschutz auf, wobei der Anfahrschutz ein nach unten offenes L aufweist und seitlich an der Profilschiene von der Ladefläche wegweisend angeordnet ist.

Dies hat den Vorteil, dass beim Beladen des Nutzfahrzeugs das Nutzfahrzeug selbst durch einen z.B. unachtsam gegen das Nutzfahrzeug stoßenden Gabelstapler nicht beschädigt wird. Im Falle dessen der Anfahrschutz ferner noch geringe elastische Eigenschaften besitzt, werden auf das Nutzfahrzeug wirkende Kräfte teilweise vom Anfahrschutz aufgenommen, sodass Beschädigungen des Nutzfahrzeugs reduziert oder vermieden werden können.

Durch das seitliche Wegweisen des Anfahrschutzes von der Ladefläche und damit auch von den Öffnungen der Profilschiene wird außerdem gewährleistet, dass bei einem ungewollten Auftreffen eines Gegenstandes oder eines Gabelstaplers auf die Profilschiene eine Berührung des Gegenstandes oder des Gabelstaplers mit den Öffnungen der Profilschiene vermieden wird, sodass eine Beschädigung der Öffnungen vermieden wird. Die Zurrgurte bleiben somit bei einem seitlichen Anfahren der Profilschiene, beispielsweise durch einen Gabelstapler, unbeschädigt, was weiter die Sicherheit der Ladungssicherung für Nutzfahrzeuge erhöht.

Nach einer weiteren Ausführungsform der Erfindung ist der Anfahrschutz unterhalb der Öffnungsränder angeordnet, sodass die Öffnungsränder frei zugänglich zur Aufnahme der Zurrgurte sind.

Nach einer weiteren Ausführungsform der Erfindung ist der Anfahrschutz einstückig mit der Profilschiene ausgebildet, sodass die Profilschiene durch reine Verformungsvorgänge in kostengünstiger Weise hergestellt werden kann.

Nach einer weiteren Ausführungsform der Erfindung weist das von der Profilschiene abstehende Ende des L-förmigen Anfahrschutzes eine nach oben offene U-Form auf. Dadurch wird das von der Profilschiene abstehende Ende des L-förmigen Anfahrschutzes mechanisch verstärkt, sodass es sich beispielsweise auch zur Aufnahme eines Direktspanners eignet. Der Direktspanner kann beispielsweise dem direkten Spannen der Plane des Nutzfahrzeugs dienen, mit welcher das Nutzfahrzeug verschließbar ist. Dadurch, dass der Anfahrschutz eine nach oben offene U-Form aufweist, ist auch dieser Teil der Profilschiene durch einfache Verformungsvorgänge herstellbar, sodass als Ausgangsmaterial in einfacher Weise ein Profil mit einem einheitlichen Querschnitt verwendet werden kann.

Nach einer weiteren Ausführungsform der Erfindung weist die Profilschiene ferner eine Planbrettführung auf, wobei die Planbrettführung zum Eingriff in eine Nut eines Planbrettes ausgebildet ist, wobei die Planbrettführung seitlich an der Profilschiene von der Ladefläche wegweisend angeordnet ist. Durch dieses seitliche Wegweisen der Planbrettführung von der Ladefläche wird wiederum gewährleistet, dass die Öffnungen zur Aufnahme der Zurrgurte nicht von einzusetzenden Planbrettern verdeckt werden. Vorzugsweise ist außerdem die Planbrettführung oberhalb der Öffnungsränder angeordnet.

Nach einer weiteren Ausführungsform der Erfindung ist die Planbrettführung einstückig mit der Profilschiene ausgebildet, was wiederum die Herstellung der Profilschiene aus einem Vollmaterial durch ausschließliche Verformungsvorgänge ermöglicht.

Nach einer weiteren Ausführungsform der Erfindung weist die Nut des Planbretts eine nach unten offene V-Form auf, wobei die Planbrettführung eine bündige Anlagefläche für zumindest einen Schenkel der V-Form aufweist. Damit ist es möglich, trotz der Verwendung von lediglich einfachen Verformungsvorgängen beim Herstellen der Profilschiene zu gewährleisten, dass das Planbrett optimal mit der Profilschiene in Anlage gebracht werden kann. Im Ergebnis ergibt sich somit ein stabiler Gesamtverbund von Planbrett und Profilschiene, welche auch bei beispielsweise starken Rüttelbewegungen des Nutzfahrzeugs ungewollten Vibrationen des Planbretts in der Planbrettführung vorbeugt.

Im Folgenden werden bevorzugte Ausführungsformen anhand der Zeichnungen näher erläutert. Es zeigen:
- Figur 1:: eine schematische Querschnittansicht einer Profilschiene an einer Ladefläche,
- Figur 2:: eine schematische Ansicht einer Profilschiene,
- Figur 3:: eine perspektivische Ansicht einer Profilschiene.

Im Folgenden werden einander ähnliche Elemente mit den gleichen Bezugszeichen gekennzeichnet.

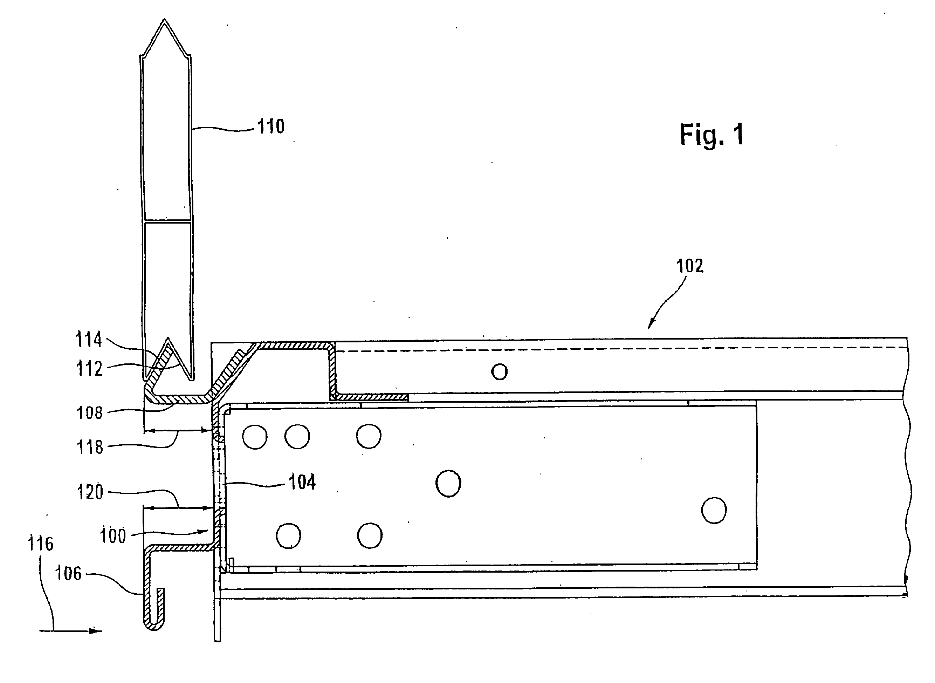

Die Figur 1 zeigt eine schematische Ansicht einer Profilschiene 100. Die Profilschiene ist an einer Ladefläche 102 eines Nutzfahrzeugs angeordnet, beispielsweise durch Verschweißung oder Verschraubung.

Die in Figur 1 gezeigte Profilschiene umfasst drei wesentliche Elemente, nämlich Öffnungen 104 zur Aufnahme von Zurrgurten zur Sicherung von auf der Ladefläche 102 zu sicherndem Transportgut, einen Anfahrschutz 106 und eine Planbrettführung 108. Der Anfahrschutz 106 dient zur Aufnahme von in Richtung 116 auf das Nutzfahrzeug wirkenden Kräften, wie sie beispielsweise beim Auftreffen einer Gabelstaplerfront auf das Nutzfahrzeug beim Beladen des Nutzfahrzeugs auftreten können.

Die Planbrettführung 108 ist zum Eingriff in eine Nut 112 eines Planbrettes 110 ausgebildet. Das Planbrett 110 dient der Bereitstellung einer Anlagefläche seitlich an der Ladefläche 102, um somit eine Abstützung einer nicht näher gezeigten Plane zum Verschließen des Nutzfahrzeugs zu ermöglichen.

Wie in Figur 1 ersichtlich, weist die Nut 112 des Planbretts 110 eine nach unten offene V-Form auf, wobei die Planbrettführung 108 eine bündige Anlagefläche 114 für zumindest einen Schenkel der V-Form aufweist. Durch einfaches Einstecken des Planbretts 110 mit seiner Nut 112 auf die Fläche 114 der Planbrettführung 108 kann somit das untere Ende des Planbretts 110 relativ zur Ladefläche 102 des Nutzfahrzeugs festgelegt werden.

In der Ausführungsform der Figur 1 sind die Profilschiene 100 und der Anfahrschutz 106 einstückig miteinander ausgebildet, was beispielsweise durch eine Verformung eines Vollmaterials realisiert werden kann. Die Planbrettführung 108 hingegen ist U-förmig, ähnlich eines nach oben offenen Trapezes ausgeformt und durch Schraub- oder Schweißvorgänge kraftschlüssig oder formschlüssig an der Profilschiene festgelegt. Dadurch kann ein Teil der Profilschiene zur Auflage auf der Ladefläche 102 kommen, wodurch auf die Profilschiene 100 wirkende Kräfte teilweise von der Ladefläche 102 aufgenommen werden können.

Alternativ ist es jedoch auch möglich, auf eine solche Auflage der Profilschiene auf der Ladefläche 102 zu verzichten und stattdessen die Planbrettführung ebenfalls einstückig mit der Profilschiene und im Anfahrschutz auszugestalten.

Sowohl der Anfahrschutz 106 als auch die Planbrettführung 108 sind von den Öffnungsrändern der Öffnungen 104 seitlich an der Profilschiene von der Ladefläche 102 wegweisend angeordnet. Dabei ist der Abstand 118 zwischen Öffnungsrand und äußerstem Ende der Planbrettführung geringer als der Abstand 120 zwischen dem Rand der Öffnungen 104 und der äußersten Kante des Anfahrschutzes 106. Damit wird gewährleistet, dass bei einer Berührung des Anfahrschutzes 106, beispielsweise durch einen Gabelstapler, nicht auch gleichzeitig eine Berührung der Planbrettführung und eine Beschädigung derselben resultieren.

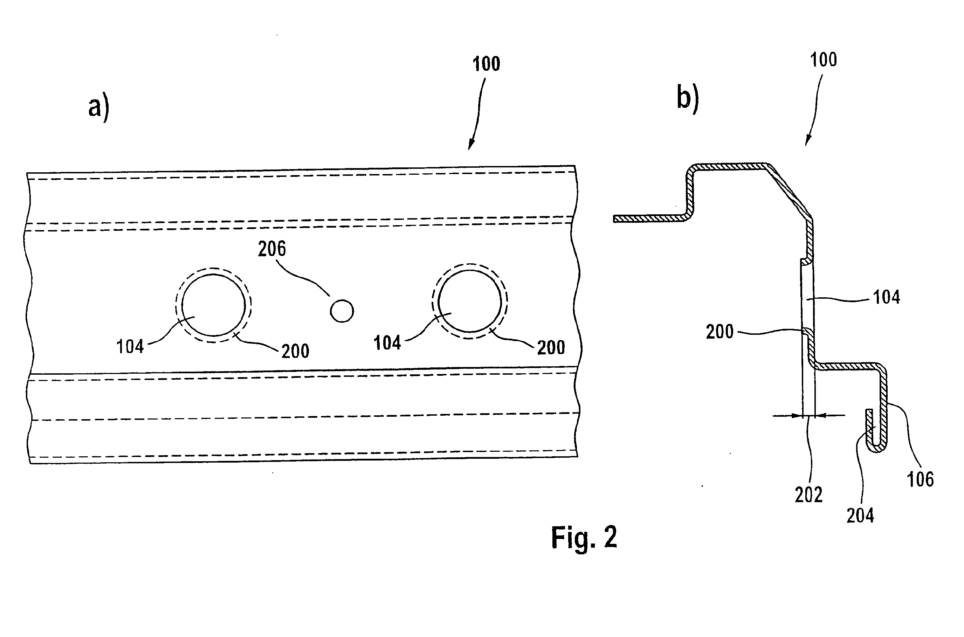

Die Figur 2 zeigt weitere schematische Ansichten der Profilschiene 100.

In der Figur 2a ist dabei die Profilschiene 100 in einer Aufsicht gezeigt. Deutlich sichtbar sind nun die Öffnungen 104 der Profilschiene 100 zur Aufnahme von Zurrgurten. Die Öffnungen 104 sind in Erstreckungsrichtung der Profilschiene voneinander beabstandet, wobei die Wandstärke der Öffnungsränder 200 der Öffnungen 104 verstärkt ist gegenüber der Wandstärke der Profilschiene zwischen den Öffnungsrändern 200 benachbarter Öffnungen 104, d.h. in der Figur 2a bezüglich des Bereichs 206.

Die Profilschiene 100 ist in der Figur 2b in einer Querschnittansicht nochmals detailliert dargestellt. Deutlich sichtbar ist nun der Rand 200 einer Öffnung 104, wobei der Rand 200 eine Verstärkung 202 durch eine Aufwölbung des Randes aufweist. Dadurch wird die Wandstärke des Öffnungsrandes 200 im Wesentlichen verdoppelt.

Ebenfalls sichtbar ist in Figur 2b nochmals das von der Profilschiene abstehende Ende des L-förmigen Anfahrschutzes, wobei dieses Ende eine nach oben offene U-Form 204 aufweist. Damit wird dieses Ende mechanisch stabilisiert, womit es sich insbesondere zur Aufnahme eines Direktspanners zur Festlegung z.B. einer Plane des Nutzfahrzeugs am Nutzfahrzeug eignet.

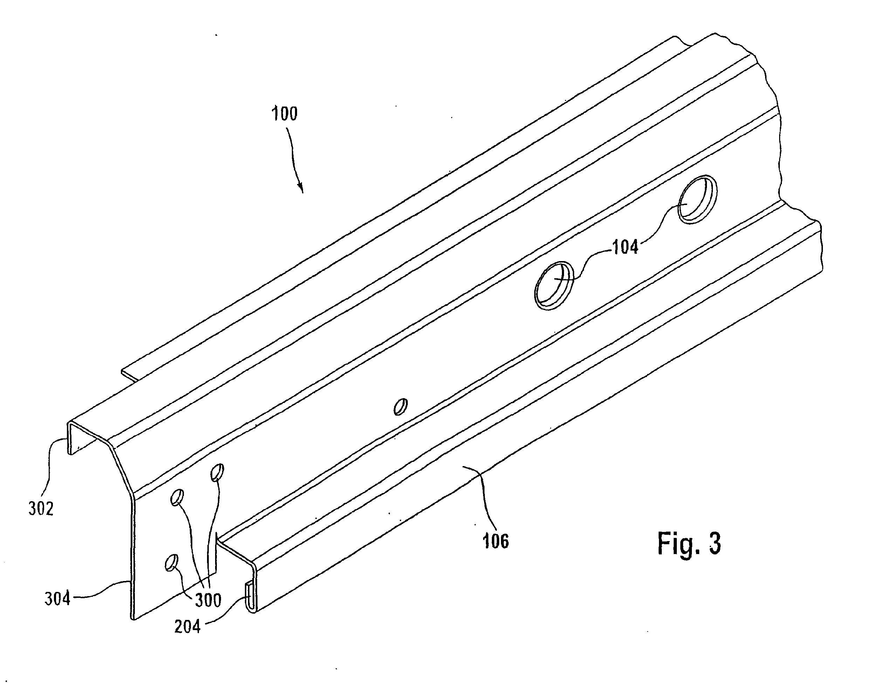

Die Figur 3 zeigt eine perspektivische Ansicht der Profilschiene 100, wobei die Profilschiene 100 nebst den Öffnungen 104 zur Aufnahme von Zurrgurten zur Sicherung von Transportgut den Anfahrschutz 106 aufweist, wobei dieser Anfahrschutz L-förmig ausgebildet ist. Ferner weist das von der Profilschiene 100 abstehende Ende des L-förmigen Anfahrschutzes 106 die nach oben offene U-Form 204 auf.

Ebenfalls in Figur 3 gezeigt sind Befestigungslöcher 300, mittels derer beispielsweise die Profilschiene an dem Nutzfahrzeug über entsprechende Befestigungsmittel wie Schrauben oder Nieten festgelegt werden kann. Insgesamt weist die Profilschiene 100 abschnittsweise ebenfalls eine U-Form, gebildet durch Schenkel 302 und 304, auf. Insbesondere die Schenkel 302 können dabei in eine entsprechende gegenstückige Nut der Ladefläche des Nutzfahrzeugs eingreifen, sodass in Verbindung mit den besagten Befestigungsmitteln eine optimale Festlegung der Profilschiene am Nutzfahrzeug gewährleistet ist.

### Bezugszeichenliste

- 100: Profilschiene
- 102: Ladefläche
- 104: Anfahrschutz
- 108: Planbrettführung
- 110: Planbrett
- 112: V-förmige Nut
- 114: Aufnahme
- 116: Richtung
- 118: Abstand
- 120: Abstand
- 200: Rand
- 202: Aufwölbung
- 204: U-Form
- 206: Bereich
- 300: Befestigungsöffnungen
- 302: Schenkel
- 304: Schenkel

## Patentansprüche

1. Profilschiene (100) für ein Nutzfahrzeug, wobei die Profilschiene (100) seitlich an einer Ladefläche (102) des Nutzfahrzeugs anordenbar ist, wobei die Profilschiene (100) Öffnungen (104) zur Aufnahme von Zurrgurten zur Sicherung von auf der Ladefläche (102) zu sicherndem Transportgut aufweist, **dadurch gekennzeichnet, dass** die Wandstärke der Offnungsränder (200) verstärkt ist gegenüber der Wandstärke (206) der Profilschiene (100) zwischen den Öffnungsrändern (200) benachbarter Öffnungen (104), und dass die Profilschiene ferner mit einem Anfahrschutz (106) versehen ist, wobei der Anfahrschutz (106) eine nach unten offene L-Form aufweist und derart seitlich an der Profilschiene (100) angeordnet ist, dass er in montierter Lage der Profilschiene von der Ladefläche (102) wegweist.

2. Profilschiene (100) nach Anspruch 1, wobei die Wandstärke der Öffnungsränder (200) durch eine Aufwölbung (202) des Randes verstärkt ist.

3. Profilschiene (100) nach Anspruch 1, wobei die Wandstärke der Öffnungsränder (200) über den Umfang der Öffnungen (104) konstant ist.

4. Profilschiene (100) nach Anspruch 1, wobei die Öffnungen (104) kreisförmig sind.

5. Profilschiene (100) nach Anspruch 1, wobei die Wandstärke der Öffnungsränder (200) zumindest verdoppelt ist.

6. Profilschiene (100) nach Anspruch 1, wobei das Nutzfahrzeug mit einer Plane verschließbar ist, wobei die Öffnungen (104) ferner zur Aufnahme von Spannern zur Befestigung der Plane am Nutzfahrzeug ausgebildet sind.

7. Profilschiene (100) nach Anspruch 1, wobei der Anfahrschutz (106) unterhalb der Öffnungsränder (200) angeordnet ist.

8. Profilschiene (100) nach Anspruch 1, wobei der Anfahrschutz (106) einstückig mit der Profilschiene (100) ausgebildet ist.

9. Profilschiene (100) nach Anspruch 1, wobei das von der Profilschiene (100) abstehende Ende des L-förmigen Anfahrschutzes (106) eine nach oben offene U-Form (204) aufweist.

10. Profilschiene (100) nach Anspruch 1, wobei der Anfahrschutz (106) zur Aufnahme eines Direktspanners ausgebildet ist.

11. Profilschiene (100) nach Anspruch 1, ferner mit einer Planbrettführung (108), wobei die Planbrettführung (108) zum Eingriff in eine Nut (112) eines Planbrettes (110) ausgebildet ist, wobei die Planbrettführung (108) seitlich an der Profilschiene (100) von der Ladefläche (102) wegweisend angeordnet ist.

12. Profilschiene (100) nach Anspruch 11, wobei die Planbrettführung (108) oberhalb der Öffnungsränder (200) angeordnet ist.

13. Profilschiene (100) nach Anspruch 12, wobei die Planbrettführung (108) einstückig mit der Profilschiene (100) ausgebildet ist.

14. Profilschiene (100) nach Anspruch 11, wobei die Nut (112) des Planbrettes (110) eine nach unten offene V-Form aufweist, wobei die Planbrettführung (108) eine bündige Anlagefläche (114) für zumindest einen Schenkel der V-Form aufweist.

## Claims

1. A profile rail (100) for a commercial vehicle, wherein the profile rail (100) can be arranged laterally on a load surface (102) of the commercial vehicle, wherein the profile rail (100) has openings (104) for receiving lashing straps for securing cargo to be secured on the load surface (102), **characterised in that** the wall thickness of the edges (200) of the openings is increased relative to the wall thickness (206) of the profile rail (100) between the edges (200) of adjacent openings (104), and the profile rail is further provided a collision protection (106), wherein the collision protection (106) is of a downwardly open L-shape and is arranged laterally on the profile rail (100) in such a way that in the mounted position of the profile rail it faces away from the load surface (102).

2. A profile rail (100) according to claim 1 wherein the wall thickness of the edges (200) of the openings is increased by a raised portion (202) at the edge.

3. A profile rail (100) according to claim 1 wherein the wall thickness of the edges (200) of the openings is constant over the periphery of the openings (104).

4. A profile rail (100) according to claim 1 wherein the openings (104) are circular.

5. A profile rail (100) according to claim 1 wherein the wall thickness of the edges (200) of the openings is at least doubled.

6. A profile rail (100) according to claim 1 wherein the commercial vehicle is closable with a tarpaulin, wherein the openings (104) are further adapted to receive tensioners for fixing the tarpaulin to the commercial vehicle.

7. A profile rail (100) according to claim 1 wherein the collision protection (106) is arranged beneath the edges (200) of the openings.

8. A profile rail (100) according to claim 1 wherein the collision protection (106) is integral with the profile rail (100).

9. A profile rail (100) according to claim 1 wherein the end projecting from the profile rail (100) of the L-shape collision protection (106) is of an upwardly open U-shape (204).

10. A profile rail (100) according to claim 1 wherein the collision protection (106) is adapted to receive a direct tensioner.

11. A profile rail (100) according to claim 1 and further comprising a tarpaulin board guide (108), wherein the tarpaulin board guide (108) is adapted for engagement into a groove (112) in a tarpaulin board (110) wherein the tarpaulin board guide (108) is arranged laterally on the profile rail (100) facing away from the load surface (102).

12. A profile rail (100) according to claim 11 wherein the tarpaulin board guide (108) is arranged above the edges (200) of the openings.

13. A profile rail (100) according to claim 12 wherein the tarpaulin board guide (108) is integral with the profile rail (100).

14. A profile rail (100) according to claim 11 wherein the groove (112) in the tarpaulin board (110) is of a downwardly open V-shape wherein the tarpaulin board guide (108) has a flush contact surface (114) for at least one limb of the V-shape.

## Revendications

1. Profilé (100) pour un véhicule industriel, le profilé (100) étant adapté pour être monté sur le côté d'un plateau de chargement (102) du véhicule, le profilé (100) présentant des ouvertures (104) pour recevoir des sangles destinées à sécuriser des objets à transporter sur le plateau (102),
**caractérisé en ce que** l'épaisseur de paroi des rebords (200) des ouvertures est augmentée par rapport à l'épaisseur de paroi (206) du profilé (100) entre deux ouvertures voisines (104) et **en ce que** le profilé est pourvu en outre d'une protection anti-collision (106), la protection anti-collision (106) présentant une forme en L ouverte vers le bas et étant disposé sur le côté du profilé (100) de façon que, lorsque le profilé est monté, la protection s'étend à l'opposé du plateau de chargement (102).

2. Profilé (100) selon la revendication 1, l'épaisseur de paroi des rebords (200) des ouvertures étant augmentée par le fait que le rebord est incurvé (202).

3. Profilé (100) selon la revendication 1, l'épaisseur de paroi des rebords (200) des ouvertures étant constante sur le pourtour des ouvertures (104).

4. Profilé (100) selon la revendication 1, les ouvertures (104) étant circulaires.

5. Profilé (100) selon la revendication 1, l'épaisseur de paroi des rebords (200) des ouvertures étant au moins doublée.

6. Profilé (100) selon la revendication 1, le véhicule industriel pouvant être fermé avec une bâche, les ouvertures (104) étant en outre formées pour recevoir des sangles pour fixer la bâche sur le véhicule industriel.

7. Profilé (100) selon la revendication 1, la protection anti-collision (106) étant disposée en dessous des rebords (200) des ouvertures.

8. Profilé (100) selon la revendication 1, la protection anti-collision (106) étant formée de matière avec le profilé (100).

9. Profilé (100) selon la revendication 1, le côté de la protection anti-collision en forme de L qui est éloigné du profilé (100) présentant une forme en U (204) ouvert vers le haut.

10. Profilé (100) selon la revendication 1, la protection anti-collision (106) étant adaptée pour recevoir une sangle directe.

11. Profilé (100) selon la revendication 1, avec des moyens de guidage (108) pour des planches de support de bâche, les moyens de guidage (108) pour des planches de support de bâche étant adaptés pour être engagés dans une rainure (112) d'une planche de support de bâche (110), les moyens de guidage (108) pour des planches de support de bâche étant disposés sur le côté du profilé (100) et orientés opposés au plateau de chargement (102).

12. Profilé (100) selon la revendication 11, les moyens de guidage (108) pour des planches de support de bâche étant disposés au-dessus des rebords (200) des ouvertures.

13. Profilé (100) selon la revendication 12, les moyens de guidage (108) pour des planches de support de bâche étant formés de matière avec le profilé (100).

14. Profilé (100) selon la revendication 11, la rainure (112) de la planche de support de bâche (110) présentant une forme en V ouverte vers le bas, les moyens de guidage (108) pour des planches de support de bâche présentant un plan d'appui (114) affleuré pour au moins une branche de la forme en V.
